# EUROPÄISCHE PATENTSCHRIFT

(11) **EP 1 436 189 B1**
(45) Veröffentlichungstag und Bekanntmachung des Hinweises auf die Patenterteilung: **24.05.2006**
(21) Anmeldenummer: 02801865.3
(22) Anmeldetag: 04.09.2002
(51) Int. Cl.: B62D 65/00, B62D 25/02

(54) **VERFAHREN ZUR HERSTELLUNG EINER SEITENWANDBAUGRUPPE FÜR EINE KRAFTFAHRZEUGKAROSSERIE**
METHOD FOR THE PRODUCTION OF A SIDE WALL MODULE FOR THE BODYWORK OF A MOTOR VEHICLE
PROCEDE DE PRODUCTION D'UN MODULE PANNEAU LATERAL POUR CARROSSERIE DE VEHICULE A MOTEUR

(30) Priorität: 19.10.2001 DE 10151685
(43) Veröffentlichungstag der Anmeldung: 14.07.2004
(73) Patentinhaber: DaimlerChrysler AG, 70567 Stuttgart (DE)
(72) Erfinder: BRODT, Martin, 71272 Renningen (DE); KLEINHANS, Klaus, 71149 Bondorf (DE); MACK, Peter, 71126 Gäufelden (DE)
(86) Internationale Anmeldenummer: PCT/EP2002/009890
(87) Internationale Veröffentlichungsnummer: WO 2003/035454

(56) Entgegenhaltungen:
- EP-A- 0 953 495
- DE-A- 10 048 233
- DE-C- 19 531 874

## Beschreibung

Die Erfindung betrifft ein Verfahren zur Herstellung einer Seitenwandbaugruppe für eine Kraftfahrzeugkarosserie gemäß dem Oberbegriff des Patentanspruches 1.

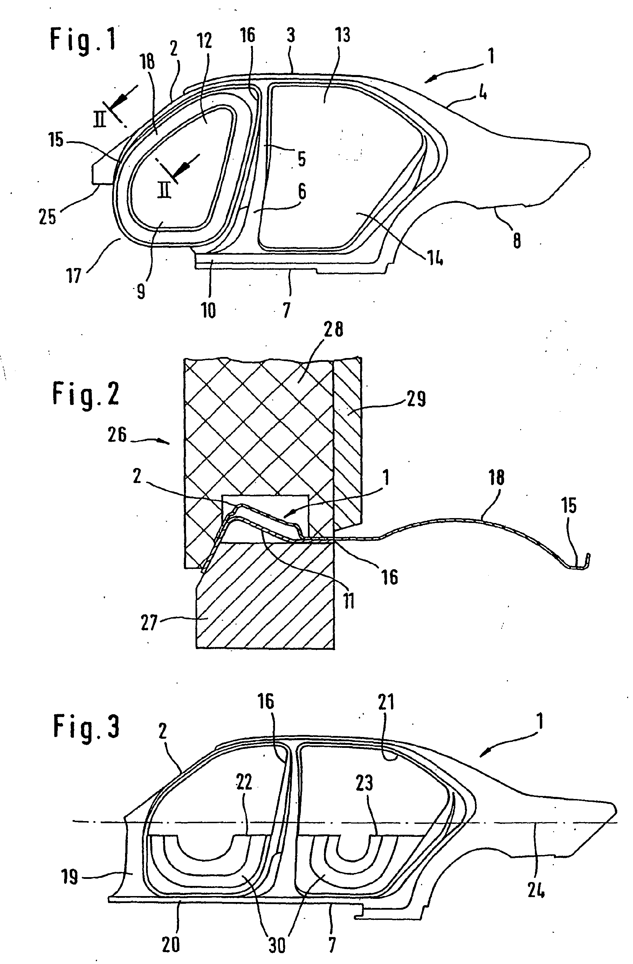

Ein gattungsgemäßes Verfahren ist aus der DE 195 31 874 C1 bekannt. Darin wird eine Seitenwandbaugruppe für die Verwendung bei Limousinen beschrieben, welche aus einem Beplankungsteil und einer mehrteiligen Seitenwandstruktur zusammengesetzt wird. Die Seitenwandstruktur wird prinzipiell gebildet durch ein Innenteil und einem außen an dem Innenteil befestigten und die Seitenwandbaugruppe integral verstärkenden Wandteil. Das Innenteil umfasst als separate Bauteile die C-Säule, den hinteren Radeinbau mit einem nach vorne ausgezogenen Schwellerabschnitt und einem seitlichen Dachrahmenabschnitt sowie den vorderen Türausschnitt mit A-Säule, Vorderwandsäule, B-Säule, dem restlichen seitlichen Dachrahmen und dem restlichen Schweller. Das Verstärkungsteil ist von der Form her dem vorderen Türausschnitt im wesentlichen nachempfunden, wobei das Verstärkungsteil sich zusätzlich über den gesamten Schwellerbereich erstreckt. Um Leichtbauanforderungen gerecht zu werden, sind der Schweller wie auch die B-Säule (gemäß Fig. 2b) in materialsparender Weise beplankungsfrei ausgebildet und stellen mit ihren Oberflächen selbst die nach außen optisch sichtbare Außenhaut der Karosserie in diesem Bereich dar. Die Außenbeplankung ist dabei aufgrund der Übernahme der Funktion der optisch sichtbaren Außenhaut durch das Innenteil und das Verstärkungsteils hinsichtlich Schweller und B-Säule weniger ausladend als üblich ausgebildet, da Schweller und B-Säule ausgespart bleiben, so dass relativ viel Gewicht an der gesamten Seitenwandbaugruppe reduziert wird. Die Beplankung wird mit dem Innenteil samt dem am diesem befestigten Verstärkungsteil quer zur Baugruppenlängsrichtung gefügt.

Die Herstellung der Seitenwandbaugruppe ist jedoch dahingehend problematisch, dass derart ausgesparte Beplankungen nach der Entnahme aus dem Preßwerkzeug mangels ausreichender Eigenstabilität einerseits und dem Aufspringen des Bleches andererseits sich in einem Maße verziehen, dass es praktisch unmöglich ist, die Beplankung mit dem verstärkten Innenteil zu fügen.

Der Erfindung liegt die Aufgabe zugrunde, ein gattungsgemäßes Verfahren dahingehend weiterzubilden, dass in einfacher Weise die Herstellung einer Seitenwandbaugruppe mit einer seitenwandteilaussparenden Beplankung prozesssicher ermöglicht wird.

Die Aufgabe ist erfindungsgemäß durch die Merkmale des Patentanspruches 1 gelöst.

Aufgrund des Verbleibs eines aussteifenden Blechabschnittes in der Tür- und/oder Fensteröffnung nach einem ersten vorläufigen Beschnitt der tiefgezogenen Platine im Presswerk wird nach Entnahme der Beplankung aus dem Presswerkzeug in einfacher Weise die konstruktive Beplankungsgeometrie beibehalten, so dass die Beplankung problemlos zur Rohbaufertigung transportiert werden kann. Auf einen zusätzlichen, teuren und - bezüglich Montagetoleranzen und Prozesssicherheit - risikobehafteten Einspannungsaufwand kann verzichtet werden, da die Beplankung in diesem Zustand noch eine ausreichende Eigensteifigkeit besitzt, so dass sie konventionell in der Fügevorrichtung für den Zusammenbau mit der Struktur gespannt und gefügt werden kann. Nach dem Fügevorgang kann der Blechabschnitt in relativ einfacher Weise aus dem jeweiligen Öffnungsrahmen in einem zweiten Endbeschnitt herausgetrennt werden, so dass die Beplankung im Fügezustand der gewünschten Form entspricht. Infolge der erfindungsgemäßen Lösung sind an der Beplankung größtmögliche Aussparungen und damit eine sehr hohe Reduzierung des Gewichtes der Beplankung und der Seitenwandbaugruppe in einfacher Weise erzielbar ohne die Prozesssicherheit der Herstellung der Baugruppe zu gefährden.

Zweckmäßige Ausgestaltungen der Erfindung können den Unteransprüchen entnommen werden; im übrigen ist die Erfindung anhand mehrerer in den Zeichnungen dargestellter Ausführungsbeispiele nachfolgend näher erläutert; dabei zeigt:
Fig. 1 in einer Seitenansicht eine einem Presswerkzeug entnommene Beplankung einer erfindungsgemäß hergestellten Seitenwandbaugruppe mit einem die Fahrertüröffnung gänzlich aussteifenden Blechabschnitt,
Fig. 2 in einem seitlichen Längsschnitt entlang der Linie II-II aus Fig. 1 die gefügte Beplankung beim Abtrennen eines Blechabschnittes,
Fig. 3 in einer Seitenansicht eine einem Presswerkzeug entnommene Beplankung einer erfindungsgemäß hergestellten Seitenwandbaugruppe mit einem die Fahrertür- und eine Fondtüröffnung im Schwellerbereich aussteifenden Blechabschnitt.

In Fig. 1 ist eine Beplankung 1 einer Seitenwandbaugruppe einer Kraftfahrzeugkarosserie dargestellt, wobei die Beplankung 1 ein einstückiges Blechpressteil ist, das sich von einer am Windschutz beginnenden A-Säule 2 über einen seitlichen Dachrahmen 3 einerseits über eine C-Säule 4 und andererseits über eine B-Säule 5, eine Kastensäule 6 und einen Schwellerabschnitt 7 hinweg zu einem hinteren Radeinbau 8 in Fahrzeuglängsrichtung nach hinten erstreckt. Die Vorderwandsäule 19, die sich an die A-Säule 2 nach unten anschließen würde, ist bei der Beplankung 1 genauso ausgespart wie der unter Fahrertüröffnung 9 befindliche Schwellerbereich 20. Im Ausführungsbeispiel ist lediglich ein in diesen Schwellerbereich 20 reichender Ansatz 10 des Schwellerabschnittes 7 ausgebildet. Der genannte Schwellerbereich 20 sowie die Vorderwandsäule 19 werden von einer Seitenwandstruktur gebildet, die dort auch den optisch nach außen wirksamen Part der Beplankung 1 übernimmt. Die Struktur wird aus einem Innenteil 11 (Fig. 2) und einem die Seitenwandbaugruppe integral verstärkenden Wandteil hergestellt, die miteinander gefügt, vorzugsweise verschweißt oder verklebt werden. Dabei wird das Wandteil außen am Innenteil 11 der Seitenwandstruktur befestigt.

Die seitenwandteilaussparende - in diesem Fall sind die Vorderwandsäule 19 und der an diese sich anschließende Schwellerbereich 20 ausgespart - Beplankung 1 wird aus einer Platine tiefgezogen und im Presswerkzeug unter Ausbildung von fahrer- und fondseitigen Fensteröffnungen 12 und 13 und Türöffnungen 9 und 14 beschnitten. Hierbei wird jedoch ein die Öffnungen 12 und 9 teilweise abdeckender Blechabschnitt 15 belassen, der entlang des gesamten Öffnungsrahmens 16 ringförmig verläuft. Dieser zum Zentrum der Öffnungen 9 und 12 stehende Blechabschnitt 15 wirkt auf den Öffnungsrahmen 16 und die damit verbundenen Beplankungsteile wie die A-Säule 2, der seitliche Dachrahmen 3 und die B-Säule 5 derart aussteifend, dass die Beplankung 1 eine Eigenstabilität erhält und keinen Verzügen unterliegt, wenn die Beplankung 1 aus dem Presswerkzeug entnommen wird. Aufgrund der Ringförmigkeit des Blechabschnittes 15 wird die Aussparung 17 überbrückt, so dass in sich geschlossener und daher relativ biegesteifer Teilabschnitt der Beplankung 1 entsteht. Der Blechabschnitt 15 kann je nach von der Aussparungsstelle und der Dicke des Rahmens 16 abhängiger erforderlicher Aussteifungsstärke mehr oder minder in die Öffnungen 9 und 12 hineinragen. Beispielsweise wird der Blechabschnitt 15 am Ort der Aussparungsstelle und dort, wo der Rahmen 16 besonders dünn ausgebildet ist, besonders breit ausgestaltet sein. Um die aussteifende Wirkung des Blechabschnittes 15 zu erhöhen, wird beim Pressen der Platine gleichzeitig randseitig des Abschnittes 15 eine Versteifungssicke 18 eingeformt, die entlang des gesamten Öffnungsrahmens 16 verläuft. Dadurch kann die Breite des Blechabschnittes 15 bei mindestens ebenso hoher Aussteifungswirkung verringert werden, so dass beim späteren Transport des Beplankungsteils 1 infolge des geringen Mehrgewichtes der zusätzliche Trageaufwand unbedeutend ist. Anstatt der ringförmigen Ausbildung der Versteifungssicke 18 ist auch die lokale Anordnung mehrerer Einzelsicken denkbar. Des weiteren bezieht sich die beschriebene Aussteifung nicht ausschließlich auf die Fenster- und Türöffnung 9 und 12 der Fahrerseite, sondern kann durchaus ebenso in der Fenster- und Türöffnung 13 und 14 des Fonds ausgebildet sein.

Eine Variante der beschriebenen Beplankung 1 ist aus Fig. 3 zu ersehen. Hier verbleibt der Blechabschnitt nur dort, wo der Öffnungsrahmen eine Materialschwächung aufweist. Bei der Variante ist zwar die Vorderwandsäule 19 an der A-Säule 2 ausgebildet und der vordere Schwellerbereich 20 ebenfalls erkennbar, jedoch ist letzterer wie auch der Schwellerabschnitt 7 aus Gewichtseinsparungsgründen sehr schmal ausgestaltet, so dass trotz des geschlossenen Rahmens 16 Steifigkeitslabilitäten im Schwellerbereich 20 und im Abschnitt 7 vorhanden sind. Die Aussparung betrifft hierbei die hinsichtlich der Breite nur teilweise Ausbildung des Schwellers. Um diese Labilitäten zu kompensieren, sind innerhalb der Rahmen 16 und 21 unmittelbar oberhalb des Schwellerbereiches 20 und des Schwellerabschnittes 7 Blechabschnitte 22 und 23 beim Pressen und Beschneiden der Beplankung 1 ausgebildet, die sich jedoch lediglich von den Schwellerbereichen 20 und 7 bis knapp unterhalb der Gürtellinie 24 der Beplankung 1 erstrecken, da die restlichen Rahmenabschnitte keiner Aussteifung bedürfen. In den Blechabschnitten 22 und 23 sind zur Steifigkeitserhöhung halbkreisförmige Versteifungssicken 30 eingeformt, die entlang der Rahmen 16 und 21 verlaufen. Die Variante hat zum Vorteil, dass aufgrund der geschlossenen Rahmen 16 und 21, insbesondere im Bereich der Vorderwandsäule 19 keine aufwendige Verputzarbeiten der Abschlußkante 25 der A-Säule 2 der vorhergehenden Variante erforderlich sind.

Die Beplankung 1 wird nun in einer Einspannungsvorrichtung 26 fixiert und dann mit der Seitenwandstruktur in Fahrzeugquerrichtung gefügt. Die in Fig. 2 gezeigte Einspannungsvorrichtung 26 besteht aus einer Aufnahme 27 und einem Niederhalter 28. Dabei wird die Fügeteile so eingespannt, dass die Blechabschnitte 15 oder 22 und 23 gänzlich frei zugänglich sind. Schließlich wird nach einem Einspannvorgang der Beplankung 1 der jeweilige aussteifende Blechabschnitt 15 oder 22,23 in der Einspannung von der Beplankung 1 aus den Rahmen 16 und/oder 21 der vollständig gefügten Seitenwandbaugruppe abgetrennt. Dies erfolgt in einfacher Weise durch eine Stanzvorrichtung, die durch hier durch einen Schneidstempel 29 und eine Schneidmatrize repräsentiert wird, welche letztere von der Einspannaufnahme 27 gebildet wird. Denkbar ist ebenso mittels Laserschneiden die Blechabschnitte 15 oder 22,23 abzutrennen. Einerseits erfordert dies zwar einen sehr hohen Invest und erbringt längerer Prozesszykluszeiten in der Produktion, andererseits ist die Laserschneidvorrichtung jedoch nicht von der Form der Beplankung 1 abhängig, die sich meistens von Fahrzeugtyp zu Fahrzeugtyp unterscheidet, so dass die Anschaffung immer wieder neuer typabhängiger Schneidwerkzeuge, die Herstellungsaufwand und Stellplatz erfordern, eingespart werden kann.

## Patentansprüche

1. Verfahren zur Herstellung einer Seitenwandbaugruppe einer Kraftfahrzeugkarosserie mit einer seitenwandteilaussparenden Beplankung (1), wobei eine wenigstens von einer A-Säule (2) bis zu einem hinteren Radeinbau (8) in Fahrzeuglängsrichtung nach hinten erstreckende, aus einem Innenteil (11) und einem die Seitenwandbaugruppe integral verstärkenden Wandteil bestehende Seitenwandstruktur in Fahrzeugquerrichtung mit einer Seitenwandbeplankung gefügt wird, die vorher aus einer Platine tiefgezogen und unter Ausbildung von Fensteröffnungen (12,13) und zumindest einer Türöffnung (9,14) beschnitten wird, und wobei das Wandteil außen am Innenteil (11) der Seitenwandstruktur befestigt wird,
**dadurch gekennzeichnet,**
**dass** die Platine derart beschnitten wird, dass in den Fensteröffnungen (12,13) und/oder den Türöffnungen (9,14) der Beplankung (1) zumindest ein aussteifender die Öffnung (9,12,13,14) teilweise abdeckender Blechabschnitt (15,22,23) verbleibt, dass nach einem Einspannvorgang der Beplankung (1) diese mit der Seitenwandstruktur gefügt wird, und dass abschließend der jeweilige aussteifende Blechabschnitt (15,22,23) abgetrennt wird.

2. Verfahren nach Anspruch 1,
**dadurch gekennzeichnet,**
**dass** der Blechabschnitt (15) entlang des gesamten Öffnungsrahmens (16) verbleibt.

3. Verfahren nach Anspruch 1,
**dadurch gekennzeichnet,**
**dass** der Blechabschnitt (22,23) nur dort verbleibt, wo der Öffnungsrahmen (16,21) eine Materialschwächung aufweist.

4. Verfahren nach einem der Ansprüche 1 bis 3,
**dadurch gekennzeichnet,**
**dass** beim Pressen der Platine zumindest eine Versteifungssicke (18,30) im Blechabschnitt (15,22,23) eingeformt wird, die entlang des Öffnungsrahmens (16,21) verläuft.

5. Verfahren nach einem der Ansprüche 1 bis 4,
**dadurch gekennzeichnet,**
**dass** der Blechabschnitt (15,22,23) in der Einspannung der vollständig gefügten Seitenwandbaugruppe herausgestanzt wird.

## Claims

1. Method for the production of a side wall module for the bodywork of a motor vehicle, having a panel (1) which leaves open a side wall part, the side wall structure, which extends to the rear in the longitudinal direction of the vehicle at least from an A-pillar (2) as far as a rear wheel mounting (8) and comprises an inner part (11) and a wall part integrally reinforcing the side wall module, being joined in the transverse direction of the vehicle to a side wall panel which has previously been deep drawn from a blank and cut, with window openings (12, 13) and at least one door opening (9, 14) being formed, and the wall part being fastened on the outside of the inner part (11) of the side wall structure,
**characterized**
**in that** the blank is cut in such a manner that at least one stiffening sheet-metal section (15, 22, 23) which at least partially covers the opening (9, 12, 13, 14) remains in the window openings (12, 13) and/or the door openings (9, 14) of the panel (1), in that after a process of clamping the panel (1) the latter is joined to the side wall structure, and in that, finally, the respective stiffening sheet-metal section (15, 22, 23) is severed.

2. Method according to Claim 1,
**characterized**
**in that** the sheet-metal section (15) remains along with the entire opening frame (16).

3. Method according to Claim 1,
**characterized**
**in that** the sheet-metal section (22, 23) remains only where the opening frame (16, 21) has a material weakening.

4. Method according to one of Claims 1 to 3,
**characterized**
**in that** at least one stiffening bead (18, 30) which runs along the opening frame (16, 21) is formed in the sheet-metal section (15, 22, 23) during the pressing of the blank.

5. Method according to one of Claims 1 to 4,
**characterized**
**in that** the sheet-metal section (15, 22, 23) is punched out while the completely adjoined side wall module is clamped in place.

## Revendications

1. Procédé de fabrication d'un module de paroi latérale d'une carrosserie de véhicule automobile, comprenant un panneau (1) économisant les pièces de paroi latérale, une structure de paroi latérale s'étendant vers l'arrière dans la direction longitudinale du véhicule au moins depuis une colonne A (2) jusqu'à un montage de roue arrière (8), constituée d'une partie intérieure (11) et d'une partie de paroi renforçant intégralement le module de paroi latérale étant assemblée dans la direction transversale du véhicule à un panneau de paroi latérale, qui a préalablement été embouti à partir d'une platine, et découpé en formant des ouvertures pour les fenêtres (12, 13) et au moins une ouverture de porte (9, 14), et la partie de paroi étant fixée à l'extérieur à la partie intérieure (11) de la structure de paroi latérale,
**caractérisé en ce que**
la platine est découpée de telle sorte qu'au moins une portion de tôle de renfort (15, 22, 23) recouvrant partiellement l'ouverture (9, 12, 13, 14) subsiste dans les ouvertures de fenêtre (12, 13) et/ou dans les ouvertures de porte (9, 14) du panneau (1), **en ce qu'**après une opération de serrage du panneau (1), celui-ci est assemblé à la structure de paroi latérale, et **en ce qu'**ensuite la portion de tôle de renfort (15, 22, 23) respective est séparée.

2. Procédé selon la revendication 1,
**caractérisé en ce que**
la portion de tôle (15) subsiste le long de tout le cadre d'ouverture (16).

3. Procédé selon la revendication 1,
**caractérisé en ce que**
la portion de tôle (22, 23) ne subsiste que là où le cadre d'ouverture (16, 21) présente un affaiblissement de matière.

4. Procédé selon l'une quelconque des revendications 1 à 3,
**caractérisé en ce que**
lors du pressage de la platine, au moins une moulure de renfort (18, 30) est moulée dans la portion de tôle (15, 22, 23), laquelle s'étend le long du cadre d'ouverture (16, 21).

5. Procédé selon l'une quelconque des revendications 1 à 4,
**caractérisé en ce que**
dans l'élément de serrage, la portion de tôle (15, 22, 23) est estampée du module de paroi latérale complètement assemblé.
